# EUROPEAN PATENT APPLICATION

(11) **EP 0 669 450 A1**
(43) Date of publication of application: **30.08.1995**
(21) Application number: 95300153.4
(22) Date of filing: 11.01.1995
(51) Int. Cl.: F01D 5/02, F01D 25/16

(54) **Component support structure**

(30) Priority: 29.01.1994 GB 9401735
(71) Applicant: ROLLS-ROYCE plc, London, SW1E 6AT (GB)
(72) Inventor: Hadaway, Edward Stafford, Duffield, Derby DE56 4HD (GB); Udall, Kenneth Franklin, Kirk Hallam, Derbyshire DE7 4JP (GB)
(74) Representative: Gunn, Michael Alan

(57) **Abstract**

A component support structure for use in a gas turbine engine (10) comprises an annular plate (28) which has a platform (26) mounted thereon. The platform (26) is arranged to be in abutting relationship with the downstream face of blades (22) of a fan rotor stage (12). The platform (26) forms the inner wall of a flow annulus (25) through which the air compressed by the fan rotor stage (12) passes. Concentric undulations are provided in the annular plate (28). The undulations stiffen the annular plate (28) in an axial direction preventing unwanted vibration frequencies. The undulations allow thermal growth of different regions of the plate (28) by different amounts due to a radial temperature gradient across the plate (28) so reducing the thermal fight between the different regions of the annular plate (28).

## Description

The present invention relates to a component support structure for use in a gas turbine engine. In particular it relates to a support structure for use in the construction of a fluid flow annulus of the kind used in compressors and fan ducts of gas turbine engines.

A conventional fan rotor for compressing air comprises a disc having a plurality of radially extending blades mounted thereon. The fan blades are mounted on the disc by inserting the radially inner end of the blades in correspondingly shaped retention grooves in the radially outer face of the disc. Downstream of the fan rotor is an annular plate which has a platform mounted thereon. The platform abuts the fan blades to define the inner wall of an annulus for the air compressed by the fan rotor.

The annular plate and platform are manufactured from a lightweight material to reduce the overall weight of the gas turbine engine. A problem with lightweight materials, such as aluminium, is that they do not have the requisite stiffness and the annular plate and platform experience unacceptable vibration frequencies. A further problem is encountered as a radial temperature gradient exists across the annular plate and platform. The radial temperature gradient causes different regions of the annular plate to expand by different amounts and introduces thermal fight into the annular plate and platform.

The present invention seeks to provide a lightweight component support structure which has increased strength and stiffness to resist unwanted deflection and vibrations whilst being able to accommodate thermal and centrifugal growth.

According to the present invention a component support structure for use in a gas turbine engine comprises a rotatable annular member having a radially inner and a radially outer face, the radially outer face being adapted for mounting an at least one component thereon, there being provided concentric undulations in the rotatable annular member, the undulations stiffen the rotatable annular member in an axial direction but allow thermal growth of different regions of the rotatable annular member by different amounts, due to a radial temperature gradient across the rotatable annular member, so reducing thermal fight between the different regions of the rotatable annular member, concentric load paths carry the centrifugal forces which in operation act on the rotating annular member. The rotatable annular member may have a platform mounted on the radially outer face. The platform may form the inner wall of a flow annulus adjacent the fan rotor of the gas turbine engine.

An integral seal may be provided on the rotatable annular member.

The rotatable annular member is preferably made from aluminium.

The present invention will now be described with reference to the accompanying drawings in which;

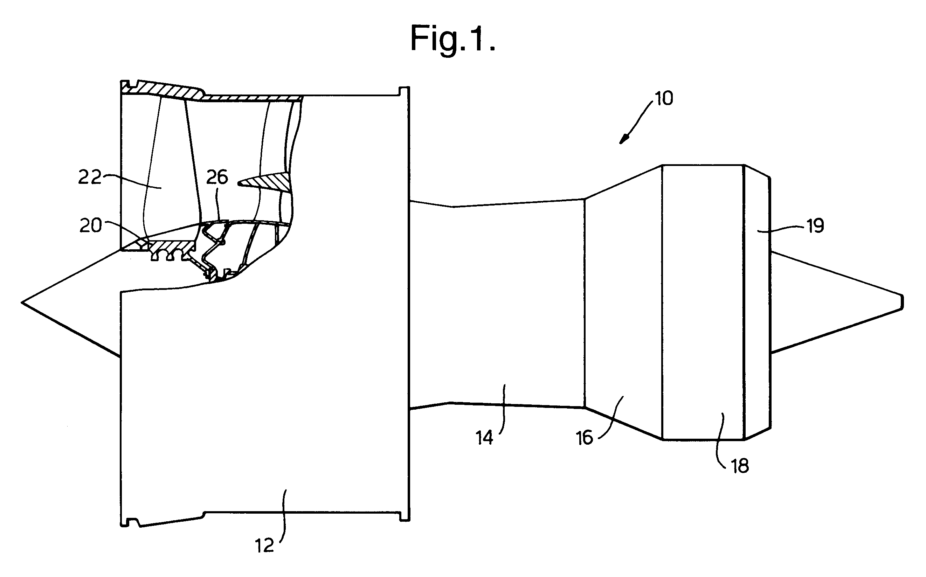

Figure 1 is a schematic view of a gas turbine engine partially broken away to show a fan rotor stage incorporating a component support structure in accordance with the present invention.

Figure 2 is a partially cross-sectional view of the fan rotor stage of the gas turbine engine shown in figure 1 incorporating a component support structure in accordance with the present invention.

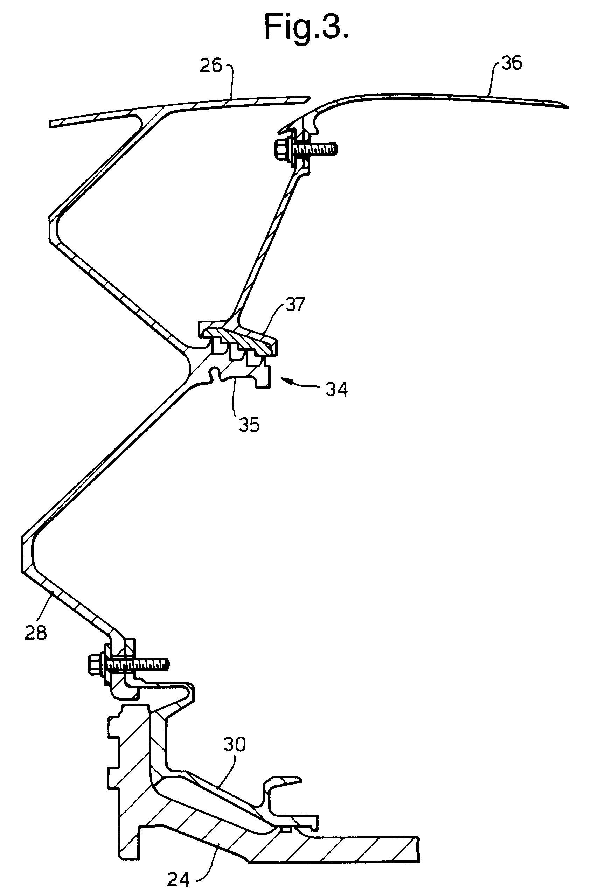

Figure 3 is an enlarged cross-sectional view of the component support structure shown in figures 2.

A gas turbine engine generally indicated at 10 comprises a ducted fan rotor 12, compressor sections 14, combustion equipment 16 and turbine sections 18 in axial flow series. The engine operates in conventional manner so that air is compressed by the fan 12 and compressors 14 before being mixed with fuel and the mixture combusted in the combustion equipment 16. The combustion products then expand through the turbines 18, which drive the compressors 14 and the fan 12 before being exhausted through a propulsion nozzle 19.

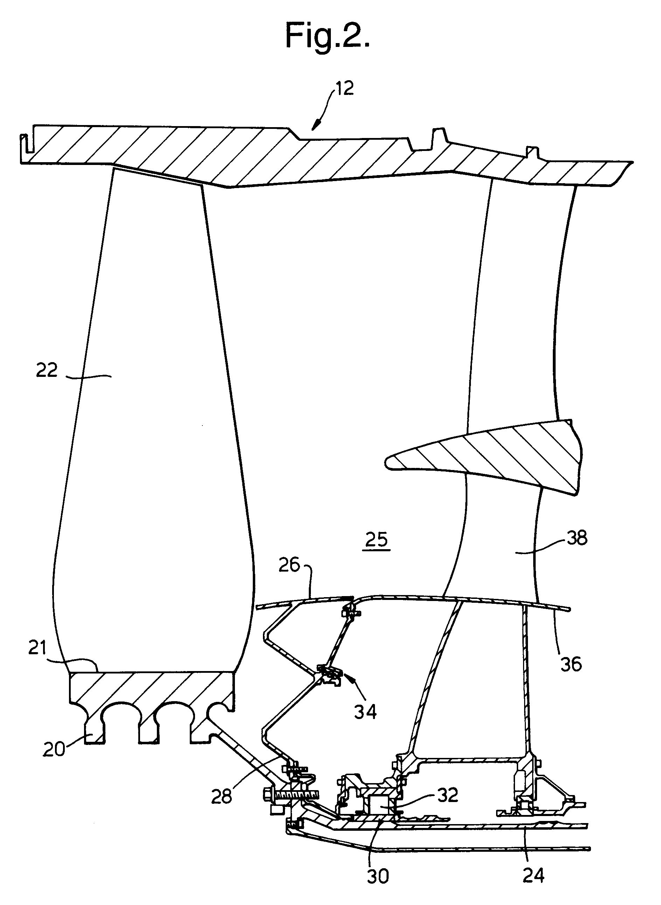

The ducted fan rotor 12 comprises a disc 20 on which a plurality of radially extending blades 22 are mounted (figure 2). The blades 22 are mounted on the disc 20 by inserting the radially inner end of the blades 22 in correspondingly shaped recesses in the radially outer face 21 of the disc 20. The disc 20 is connected to a shaft 24 which drives the fan rotor stage 12.

A platform 26 is arranged in abutting relationship with the downstream face of the blades 22. The platform 26 defines the inner wall of a flow annulus 25 through which the air compressed by the fan 12 passes. The platform 26 is mounted on an annular plate 28 which has a plurality of concentric undulations therein. The annular plate 28 is connected to a journal 30 of a bearing 32 mounted on the shaft 24 of the fan rotor stage 12.

In operation the shaft 24 rotates the fan disc 20 and the annular plate 28. The undulations in the annular plate 28 prevent unwanted vibration frequencies by increasing the stiffness of the annular plate 28 in an axial direction. As it rotates the annular plate 28 experiences centrifugal loads and a radial temperature gradient which cause different regions of the plate 28 to expand at different rates. The radial flexibility of the undulations allow this differential expansion to occur without generating a thermal fight between hotter and cooler regions of the plate 28. The platform 26 is sufficiently stiff in a circumferential direction to that its growth is compatible with that of the blades 22.

In the preferred embodiment of the present invention a seal 34 is provided between the annular plate 28 and a static outlet guide vane 38 located further downstream. The seal 34 is a two part construction: a rotatable portion 35 being mounted on the annular plate 28 and a static portion 37 being mounted on a platform 36 of the static outlet guide vane 38. The seal 34 prevents leakage of cooling air between the platform 26 and the static outlet guide vane 38 into the flow annulus 25. In the preferred embodiment of the present invention the platform 26 and the portion 35 of the seal 34 are formed integrally with the annular plate 28 and are manufactured from a lightweight material such as aluminium.

Although a support structure 28 has been described for a platform 26 which defines the inner wall of a flow annulus 25 in a rotor stage 12 of a gas turbine engine 10 it will be appreciated by one skilled in the art that a support structure in accordance with the present invention could be used to support other components whether stationary of rotating.

## Claims

1. A component support structure for use in a gas turbine engine (10) comprising a rotatable annular member (28) having a radially inner and a radially outer face, the radially outer face being adapted for mounting an at least one component (26) thereon, there being provided concentric undulations in the rotatable annular member (28), the undulations stiffen the rotatable annular member (28) in an axial direction but allow thermal growth of different regions of the rotatable annular member (28) by different amounts, due to a radial temperature gradient across the rotatable annular member (28), so reducing thermal fight between different regions of the rotatable annular member (28), characterised in that concentric load paths carry the centrifugal forces which in operation act on the rotating annular member (28).

2. A component support structure as claimed in claim 2 characterised in that the radially outer face of the rotatable annular member (28) has a platform (26) mounted thereon.

3. A component support structure as claimed in claim 2 characterised in that the platform (26) is formed integrally with the rotatable annular member (28).

4. A component support structure as claimed in claim 2 or claim 3 characterised in that the platform (26) defines the inner wall of a flow annulus (25) in the gas turbine engine (10).

5. A component support structure as claimed in claim 4 characterised in that the platform (26) defines the inner wall of a flow annulus (25) adjacent the fan rotor stage (12) of the gas turbine engine (10).

6. A component support structure as claimed in claim 5 characterised in that a seal (34) is provided on the rotatable annular member (28).

7. A component support structure as claimed in claim 6 characterised in that the seal (34) is formed integrally with the rotatable annular member (28).

8. A component support structure as claimed in any preceding claim characterised in that the rotatable annular member (28) is made from aluminium.
